# EUROPEAN PATENT APPLICATION

(11) **EP 4 800 640 A1**
(43) Date of publication of application: **02.09.2026**
(21) Application number: 24952429.9
(22) Date of filing: 30.08.2024
(51) Int. Cl.: G06T 5/77

(54) **INTERPOLATION-BASED PSEUDO-COLOR REMOVAL METHOD AND APPARATUS FOR IMAGES, AND SYSTEM-ON-CHIP AND COMPUTER STORAGE MEDIUM**

(71) Applicant: VeriSilicon Microelectronics (Shanghai) Co., Ltd., Shanghai 201203 (CN); VeriSilicon Microelectronics (Chengdu) Co., Ltd., Chengdu, Sichuan 610041 (CN); Verisilicon Microelectronics (Hainan) Co., Ltd., Haikou, Hainan 570208 (CN); VeriSilicon Technology (Shanghai) Co., Ltd., Shanghai 201306 (CN); VeriSilicon Microelectronics (Nanjing) Co., Ltd., Nanjing, Jiangsu 211500 (CN)
(72) Inventor: HE, Huali, Shanghai 200120 (CN); KONG, Xiaodong, Shanghai 200120 (CN); ZHOU, Lei, Shanghai 200120 (CN); YANG, Pingzhong, Shanghai 200120 (CN)
(74) Representative: Bayramoglu et al.
(86) International application number: PCT/CN2024/115866
(87) International publication number: WO 2026/044683

(57) **Abstract**

Interpolation-based image pseudo-color removal method includes: acquiring original image; extracting cache window based on current target pixel in original image; calculating chromatic aberration channel values in cache window; performing filtering process to chromatic aberration channel values, to remove pseudo-color according to direction information of current target pixel; calculating and obtaining all-channel-value having pseudo-color removed, according to chromatic aberration channel values having been filtered, before outputting image having pseudo-color removed. By locating edge regions where pseudo-colors are prone to occur based on direction information of current target pixel, and filtering chromatic aberration channel values obtained through difference calculation, it is able to remove pseudo-colors from edge regions and textures accurately while ensuring image clarity, thereby improving image quality effectively and removing pseudo-colors from image with high efficiency.

## Description

### TECHNICAL FIELD

The present application relates to the technical field of image processing, in particular to an interpolation-based image pseudo-color removal method and device, a system-on-chip, and a computer readable storage medium.

### BACKGROUND

In the prior art, a plurality of imaging devices, such as a camera, for sake of cost, an imaging system thereof usually adopts a design scheme of a single image sensor coupling with a light filter. After the image sensor has acquired an image, an ISP (Image Signal Processing) system will be adopted to process the image having been acquired, before outputting a color image of RGB finally. The ISP usually comprises a linear error correction, denoising, defection removal, white balance, color correction, color mapping, de-mosaic, and more.

### SUMMARY

### TECHNICAL PROBLEM TO BE SOLVED

In image processing, artifacts such as false colors often occur in complex texture areas, or errors may happen during interpolation when local pixel values are averaged incorrectly, or the image fails to align as intended, all of which severely degrade the quality of the final color output. Therefore, it is essential to remove these artifacts to ensure clear, accurate colors and a visually appealing result.

### SOLUTIONS TO SOLVE THE PROBLEMS

In image processing, artifacts such as false colors often occur in complex texture areas, or errors may happen during interpolation when local pixel values are averaged incorrectly, or the image fails to align as intended, all of which severely degrade the quality of the final color output. Therefore, it is essential to remove these artifacts to ensure the image colors are clear, accurate, and visually appealing.

In order to solve the technical problem stated above, the present application provides an interpolation-based image pseudo-color removal method comprising steps: acquiring an original image; extracting a cache window based on a current target pixel in the original image; calculating a plurality of chromatic aberration channel values in the cache window; performing a filtering process to the plurality of chromatic aberration channel values, to remove a pseudo-color according to a direction information of the current target pixel; and calculating and obtaining an all-channel-value having the pseudo-color removed, according to a plurality of chromatic aberration channel values having been filtered, before outputting an image having the pseudo-color removed.

Preferably, in the interpolation-based method for removing image pseudo-colors, the step of performing a filtering process to the plurality of chromatic aberration channel values, to remove a pseudo-color according to a direction information of the current target pixel comprises steps: extracting a plurality of candidate points for filtering from the cache window according to the direction information of the current target pixel to obtain a filtering point set; acquiring a plurality of chromatic aberration channel values corresponding to all the plurality of candidate points for filtering in the filtering point set to obtain a filtering dataset; and performing a classified median filtering process to the filtering dataset, to obtain a plurality of chromatic aberration channel values having the pseudo-color removed of all the plurality of candidate points for filtering.

Preferably, in the interpolation-based method for removing image pseudo-colors, the step of extracting the cache window based on the current target pixel in the original image comprises: extracting a cache window of m rows and n columns based on the current target pixel in the original image, wherein m is an odd number no less than 3, and n is an odd number no less than 3; the current target pixel is located in a middle column and a middle row of the cache window.

Preferably, in the interpolation-based method for removing image pseudo-colors, the step of calculating the plurality of chromatic aberration channel values in the cache window, comprises: calculating R-G and B-G as two chromatic aberration channels, if the original image is a RGB image; taking U and V as two chromatic aberration channels, if the original image is a YUV image.

Preferably, in the interpolation-based method for removing image pseudo-colors, the direction information of the current target pixel comprises: if the current target pixel is locating on an edge or not, if the current target pixel is a point having a direction or not, and an edge direction of the current target pixel.

Preferably, in the interpolation-based method for removing image pseudo-colors, the step of extracting the plurality of candidate points for filtering from the cache window according to the direction information of the current target pixel to obtain a filtering point set comprising steps: determining whether the current target pixel is locating at an edge, if so, then determining whether the current target pixel is a point having a direction; if it is determined that the current target pixel is a point having a direction, then selecting a direction perpendicular to a direction of the edge of the current target pixel as a direction of selecting the plurality of candidate points for filtering, before extracting no less than 8 candidate points for filtering from the cache window along the direction of selecting the plurality of candidate points; and, if it is determined that the current target pixel is a point having no direction, then extracting no less than 8 candidate points for filtering from the cache window according to an isotropic distribution mode.

Preferably, in the interpolation-based method for removing image pseudo-colors, 8 of the plurality of candidate points for filtering having been extracted are adjacent to the current target pixel.

Preferably, in the interpolation-based method for removing image pseudo-colors, the step of performing the classified median filtering process to the filtering dataset, to obtain the plurality of chromatic aberration channel values having the pseudo-color removed of all the plurality of candidate points for filtering, comprising: allocating a chromatic aberration channel value in the filtering dataset into an outlier chromatic aberration region or a target chromatic aberration region, according to a preset chromatic aberration channel threshold; determining whether the current target pixel is located in the target chromatic aberration region; retaining a first chromatic aberration channel value, if the first chromatic aberration channel value of the current target pixel is located in the target chromatic aberration region; and replacing a second chromatic aberration channel value of the current target pixel with a third chromatic aberration channel value closest to the current target pixel in the target chromatic aberration region, if the second chromatic aberration channel value of the current target pixel is located in the outlier chromatic aberration region.

Preferably, in the interpolation-based method for removing image pseudo-colors, the step of determining whether the current target pixel is located in the target chromatic aberration region comprising steps: sorting the plurality of chromatic aberration channel values in the filtering dataset according to a preset method; obtaining a rank of each of the plurality of chromatic aberration channel values of the current target pixel in the filtering dataset having been sorted; and determining whether the current target pixel is located in the target chromatic aberration region based on the rank thereof.

In order to solve the technical problem stated above, the present application also provides an interpolation-based image pseudo-color removal device, configured to achieve the interpolation-based image pseudo-color removal method stated above, the device comprises: an image acquisition module configured to acquire an original image; a chromatic aberration calculation module configured to extract a cache window and calculating a plurality of chromatic aberration channel values in the cache window; a filtering processing module configured to filter the plurality of chromatic aberration channel values to remove a pseudo-color according to a direction information of the current target pixel; and an image output module configured to calculate and obtain an all-channel-value having the pseudo-color removed, according to a plurality of chromatic aberration channel values having been filtered, before outputting an image having the pseudo-color removed.

In order to solve the technical problem in the prior art stated above, the present application further provides a system-on-chip, comprising a processor coupled with a memory, wherein the processor is configured to execute a computer program stored in the memory, so as to perform the interpolation-based image pseudo-color removal method stated above.

In order to solve the technical problem stated above, the present application further provides a computer storage medium, wherein the computer storage medium has an executable program stored, and when the executable program is being executed, the interpolation-based image pseudo-color removal method stated above is achieved.

### BENEFICIAL EFFECT

The present application provides an interpolation-based image pseudo-color removal method and device, a system-on-chip, and a computer readable storage medium. By locating a plurality of edge regions where a plurality of pseudo-colors are prone to occur based on the direction information of the current target pixel, and filtering the chromatic aberration channel values obtained through a difference calculation, the systems and methods described here are configured to remove the plurality of pseudo-colors from the plurality of edge regions and a plurality of textures accurately while ensuring an image clarity, thereby improving an image quality effectively and removing the plurality of pseudo-colors from the image with high efficiency.

### BRIEF DESCRIPTION OF THE DRAWINGS

FIG. 1 illustrates a flowchart of the interpolation-based image pseudo-color removal method as provided by the present embodiment;
FIG. 2 illustrates a schematic diagram on a plurality of coordinate positions of each pixel in a 5 × 5 cache window as provided by the present embodiment;
FIG. 3 illustrates a flowchart on a step S4 as provided by the present embodiment;
FIG. 4 illustrates a schematic diagram on a plurality of candidate points for filtering to be extracted when adopting a vertical direction to select the plurality of candidate points for filtering as provided by the present embodiment;
FIG. 5 illustrates a schematic diagram on a plurality of candidate points for filtering to be extracted when adopting a horizontal direction to select the plurality of candidate points for filtering as provided by the present embodiment;
FIG. 6 illustrates a schematic diagram on a plurality of candidate points for filtering to be extracted when adopting a diagonal direction to select the plurality of candidate points for filtering as provided by the present embodiment;
FIG. 7 illustrates a schematic diagram on a plurality of candidate points for filtering to be extracted when adopting an opposite-diagonal direction to select the plurality of candidate points for filtering as provided by the present embodiment;
FIG. 8 illustrates a schematic diagram on a plurality of candidate points for filtering to be extracted when adopting no direction to select the plurality of candidate points for filtering as provided by the present embodiment;
FIG. 9 illustrates a schematic diagram on a classified median filtering process provided by the present embodiment;
FIG. 10 illustrates a schematic structural diagram on the interpolation-based image pseudo-color removal device provided by the present embodiment; and
FIG. 11 illustrates a schematic structural diagram on the system-on-chip provided by the present embodiment.

### DESCRIPTION OF THE EMBODIMENTS

To make the objective, technical solutions and advantages of the present disclosure clearer, the technical solutions in the embodiments of the present application will be clearly and completely described below with reference to the accompanying drawings of the present application. Apparently, the drawings are all simplified schematic diagrams and merely illustrating the basic structure of the present application in a schematic manner, thus only compositions related to the present application are shown, and it is noted that, in a case of no conflict, the embodiments in the present application and the features in the embodiments may be combined with each other.

A plurality of specific details are set forth in the following description in order to fully understand the present disclosure, however, the present disclosure may also be implemented in a plurality of other manners different from those described herein, and therefore, the protection scope of the present disclosure is not limited by the specific embodiments disclosed below.

Currently, a main cause of a plurality of pseudo-colors in an image comes from a lens or an ISP process. Wherein, the plurality of pseudo-colors related to the lens usually appear at an edge of an object, most having a plurality of colors including purple, yellow green, and magenta, having a varying width and a radial tendency; while the plurality of pseudo-colors related to the ISP process usually appear at an edge of an object and in an area with a dense texture, having a small width (usually around 2 pixels) and a high saturation. Therefore, as long as the plurality of pseudo-colors at an edge of an object can be removed effectively, an effect of removing the plurality of pseudo-colors will be improved effectively, that enhances a quality of an image.

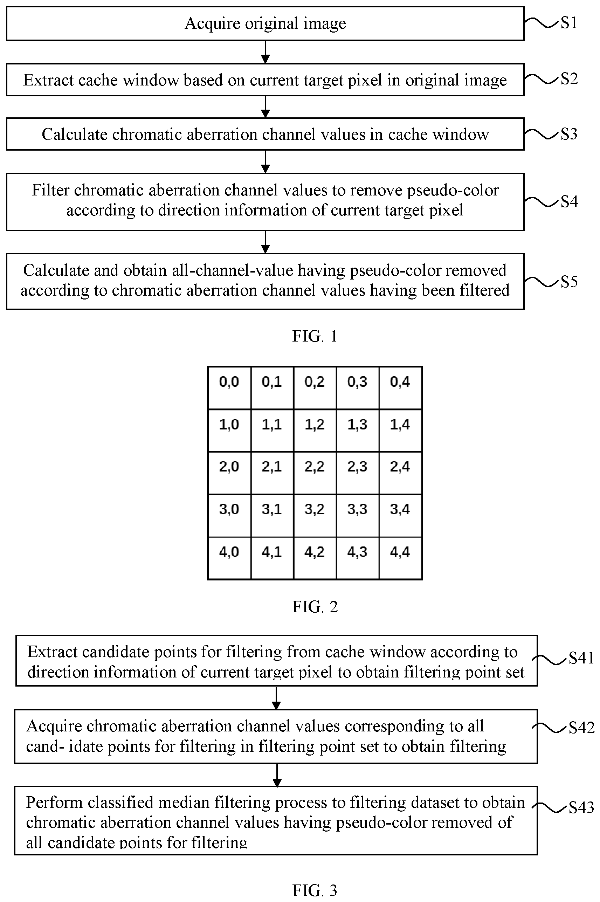

Based on this, the present embodiment provides an interpolation-based image pseudo-color removal method, shown as FIG.1, comprising steps:
S1. acquiring an original image;
S2. extracting a cache window based on a current target pixel in the original image;
S3. calculating a plurality of chromatic aberration channel values in the cache window;
S4. filtering the plurality of chromatic aberration channel values to remove a pseudo-color according to a direction information of the current target pixel; and
S5. calculating and obtaining an all-channel-value having the pseudo-color removed, according to a plurality of chromatic aberration channel values having been filtered, before outputting an image having the pseudo-color removed.

The present embodiment provides an interpolation-based image pseudo-color removal method, by positioning a plurality of edge regions where a plurality of pseudo-colors are prone to occur based on the direction information of the current target pixel, and filtering the plurality of chromatic aberration channel values obtained through a difference calculation, the method is able to remove accurately the plurality of pseudo-colors from the plurality of edge regions and a plurality of textures while ensuring an image clarity, thereby improving an image quality effectively and removing the plurality of pseudo-colors from the image with high efficiency.

Specifically, in the present embodiment, the step S1 includes acquiring an original image, where the original image may be obtained from various types of photography and imaging devices, or may be an image output after a plurality of partial image processing steps. A format of an obtained raw image can be a RAW image (a raw image obtained from an image sensor), a RGB image (an image composed of a color intensity combination of three channels including red (R), green (G), and blue (B)), or a YUV image (an image composed of a brightness signal (Y) and a chromaticity signal (U and V)).

Further, in the present embodiment, the step S2 includes extracting a cache window based on a current target pixel in the original image, specifically, based on the current target pixel in the original image, extracting a cache window having m rows and n columns, where m is an odd number greater than or equal to 3 and n is an odd number greater than or equal to 3; while the current target pixel is located in a middle row and a middle column of the cache window.

In the present embodiment, a pixel value of a pixel in the cache window is denoted as Px,y, where x represents a row coordinate of the pixel in the cache window, in an order of the rows from left to right, x=0,1,··· ···m-1; y represents a column coordinate of the pixel in the cache window, in an order from top down, y=0,1,......,n-1; while a pixel value of the current target pixel is denoted as Pi,j, where $i = \frac{m - 1}{2} , j = \frac{n - 1}{2}$.

Shown as FIG.2, in the present embodiment, the cache window is set as: m=5, n=5, thus a 5×5 cache window is extracted. Now the current target pixel is located in the third row and the third column, that is, i=2, j=2, the pixel value of the current target pixel is denoted as P2,2.

In one implementation, a size of the cache window can be determined according to a hardware resource or image capture content, and the cache window may be a square or a rectangular.

Further, according to a difference between a format of different original images, in the present embodiment, the step S3, calculating a plurality of chromatic aberration channel values in the cache window, wherein a method thereof comprises specifically:
S3-1, if the original image is a RGB image, then calculating R-G and B-G as two chromatic aberration channels. Wherein a method of calculating R-G chromatic aberration value and B-G chromatic aberration value in a RGB domain has been well known to those skilled in the art, thus no more details will be repeated in the present application; and
S3-2, if the original image is a YUV image, then taking U and V as two chromatic aberration channels. Wherein a method of taking both values of a U channel and a V channel in a YUV domain has also been well-known to those skilled in the art, thus no more details will be repeated in the present application.

In a real application, if the original image is a non RGB or YUV format image, such as a RAW image or more, the method is able to covert the format of the original image to the RGB format or the YUV format through a method of color gamut conversion or more, followed by calculating the chromatic aberration channel values according to the steps stated above. The method of color gamut conversion has been well known to those skilled in the art, thus no more details will be repeated in the present application.

Further, in the cache window, if the current target pixel is located in a flat area, most of the chromatic aberration values in the present area will be relatively close, however, due to an influence of noise, there may be a very small number of outlier chromatic aberration values. If the current target pixel is located in an edge region, the chromatic aberration values within the region may be clustered into two groups, corresponding to both sides of the edge. A group of clustering having a larger chromatic aberration value may be identified as the chromatic aberration value on an edge side where the current target pixel is located. While a pseudo-color appears in the edge region, in addition to a larger clustering of the chromatic aberration values on the edge side where the current target pixel is located, there are further a plurality of additional pixels having a large chromatic aberration value that are not included in the clustering, however these are usually the pseudo-colors shall be removed.

Thus, in the present embodiment, shown as FIG.3, the step S4, filtering the plurality of chromatic aberration channel values to remove the pseudo-color according to the direction information of the current target pixel, comprises:
S41, extracting a plurality of candidate points for filtering from the cache window according to the direction information of the current target pixel to obtain the filtering point set.

Specifically, in the present embodiment, the direction information of the current target pixel comprises: if the current target pixel is located on an edge, if the current target pixel is a point having a direction, and an edge direction of the current target pixel.

In a real application, it is possible to determine whether the current target pixel is at the edge according to an interpolation calculation during a process of de mosaic, or determine whether the current target pixel is at the edge according to a plurality of other processing modules including an edge calculation in the ISP, or it is even possible to conduct an edge detection separately to determine whether the current target pixel is at the edge or not. When determining whether the current target pixel is a point having a direction, the calculation result of an interpolation direction during the process of de mosaic can be used to make the judgment. If an interpolation direction is calculated and obtained during the process of de mosaic, then the current target pixel is considered a point having a direction. Since a fact that an interpolation direction obtained during the process of de mosaic is generally consistent with an edge direction, thus in a real application, it is possible to define an edge direction of a current target pixel as the interpolation direction.

While extracting the plurality of candidate points for filtering, first, it is determined whether the current target pixel is locating at an edge or not, if so, it is then determined whether the current target pixel is a point having a direction or not.

If it is determined that the current target pixel is a point having a direction, then a perpendicular direction of the edge direction of the current target pixel is adopted as the direction of selecting the plurality of candidate points, that is, adopting a perpendicular direction of the interpolation direction as the direction of selecting the plurality of candidate points for filtering. Due to the direction of selecting the plurality of candidate points being perpendicular to the edge direction, the candidate points for filtering having been extracted are able to cover more normal pixels on both sides of the edge, thereby improving an accuracy of judging the pseudo colors. Then, following the direction of selecting the plurality of candidate points, at least 8 candidate points for filtering are extracted from the cache window.

If it is determined that the current target pixel is a point having no direction, then at least 8 candidate points for filtering are extracted from the cache window according to an isotropic distribution. Since the current target pixel is determined to be a non-directional point, it can be considered that the current target pixel is in a flat area. However, a flat area itself is not prone to have the pseudo-colors, thus there are no strict requirements for an extraction method of the candidate points for filtering in the flat area. Instead, it only requires a number of the candidate points for filtering being extracted is consistent with a number of the candidate points for filtering when the current target pixel is a point having a direction, which facilitates to a plurality of subsequent filtering process.

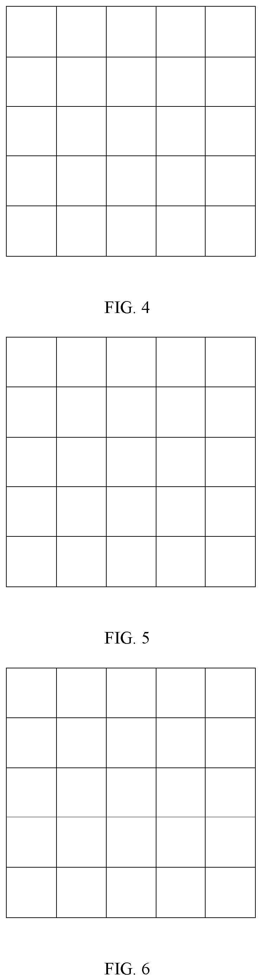

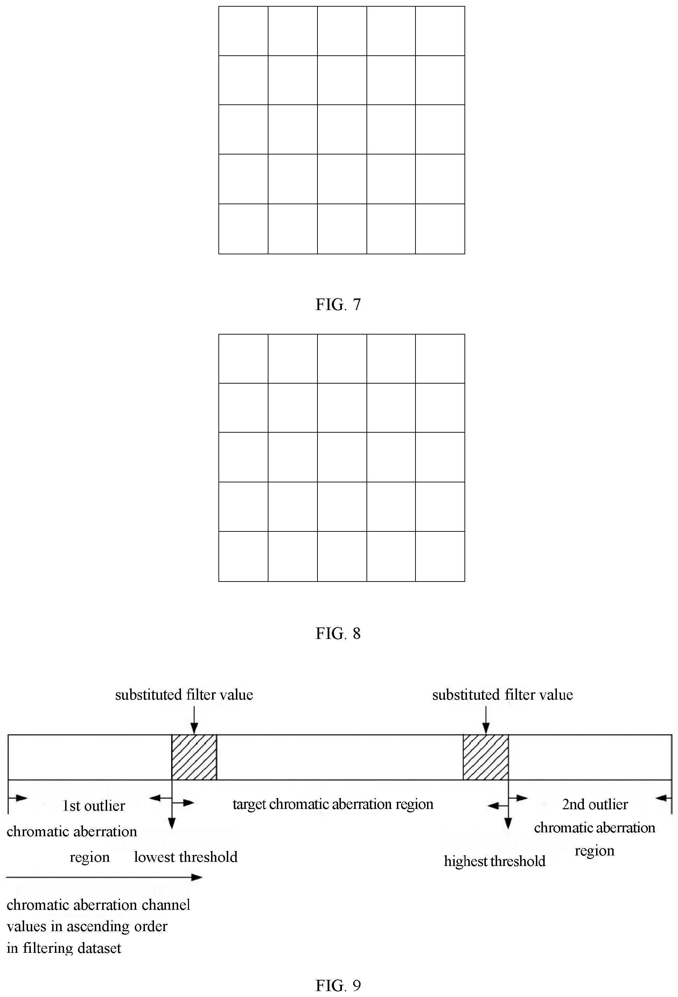

In a specific embodiment, a 5×5 cache window is taken as an example, when the direction of selecting the plurality of candidate points is in a perpendicular direction, shown as FIG.4, pixels of three middle columns in the perpendicular direction are extracted as the plurality of candidate points for filtering (a plurality of gray blocks in FIG.4 represent the candidate points for filtering to be extracted). Now, the current target pixel along with eight adjacent pixels thereof, are all extracted as the plurality of candidate points for filtering. When the direction of selecting the plurality of candidate points is in a horizontal direction, shown as FIG.5, pixels of three middle columns in the horizontal direction are extracted as the plurality of candidate points for filtering (a plurality of gray blocks in FIG.5 represent the candidate points for filtering to be extracted). Now, the current target pixel along with eight adjacent pixels thereof, are all extracted as the plurality of candidate points for filtering. When the direction of selecting the plurality of candidate points is in a diagonal direction, shown as FIG.6, 15 pixels in a diagonal direction are extracted as the plurality of candidate points for filtering (a plurality of gray blocks in FIG.6 represent the candidate points for filtering to be extracted). When the direction of selecting the plurality of candidate points is in an opposite diagonal direction, shown as FIG.7, 15 pixels in the opposite diagonal direction are extracted as the plurality of candidate points for filtering (a plurality of gray blocks in FIG.7 represent the candidate points for filtering to be extracted). Now, the current target pixel along with eight adjacent pixels thereof, are all extracted as the plurality of candidate points for filtering. When the current target pixel is a point having no direction (no direction to select the candidate points), shown as FIG.8, the current target pixel is taken as a center, and 15 pixels are uniformly extracted as the candidate points for filtering along all directions (a plurality of gray blocks in FIG.8 represent the candidate points for filtering to be extracted). Now, the current target pixel along with eight adjacent pixels thereof, are all extracted as the plurality of candidate points for filtering.

Of course, those skilled in the art are able to obtain a method for extracting the candidate points for filtering in a cache window of a plurality of other sizes. In an embodiment, the current target pixel is taken as a center, to extract a plurality of pixels in a plurality of columns, rows, diagonals, or opposite diagonals that are symmetrical to each other. In another embodiment, when a size of the cache window is less than 5×5 (such as the size of the cache window is 3×3, 3×5, or 5×3), the current target pixel is taken as a center, to extract a plurality of pixels in a plurality of columns, rows, diagonals, or opposite diagonals that are symmetrical to each other, wherein when the size of the cache window is 3×3, the candidate points for filtering to be extracted are 8 pixels surrounding the current target pixel. Alternatively, when the size of the cache window is greater than 5×5, the current target pixel is taken as a center, to extract a plurality of pixels as the candidate points for filtering, in a plurality of columns, rows, diagonals, or opposite diagonals that are symmetrical to each other, which is still in a range of 5×5. The present application has no restrictions on it.

In a real application, it is necessary to arrange the number of the plurality of candidate points for filtering and the positions of a plurality of pixels to be extracted reasonably, based on an actual size of the cache window and a requirement on accuracy to remove the pseudo-colors.

Preferably, in order to facilitate subsequent filtering processing, the number of the pixels being extracted shall be consistent. At a same time, in order to ensure continuity when judging the edge and accuracy when judging the pseudo-colors, a region composed of the plurality of candidate points for filtering to be extracted shall be continuous and complete, and all the plurality of candidate points for filtering shall be adjacent to each other, that is, there should be no non candidate points for filtering existing in the region composed of all the candidate points for filtering. Further, the plurality of candidate points for filtering to be extracted comprise the current target pixel, and 8 of the plurality of candidate points for filtering are adjacent to the current target pixel.

S42, acquiring a plurality of chromatic aberration channel values corresponding to all the plurality of candidate points for filtering in the filtering point set to obtain a filtering dataset.

Specifically, the chromatic aberration channel values of the candidate points for filtering to be extracted are calculated according to an image format. In an embodiment, for a RGB image, it shall calculate a chromatic aberration channel value of B-G and a chromatic aberration channel value of R-G for each candidate point for filtering, which are noted as Cb and Cr. The filtering dataset shall be established separately according to different types of the chromatic aberration channel values. For example, the chromatic aberration channel values Cb of B-G of all the candidate points for filtering together are composing a filtering dataset of Cb, which is denoted as Cb[T]; the chromatic aberration channel values Cr of R-G of all the candidate points for filtering together are composing a filtering dataset of Cr, which is denoted as Cr[T]. Wherein T is a total number of the candidate points for filtering. Taking an extraction of 15 candidate points for filtering from the 5×5 cache window stated above as an example, the filtering datasets are Cb[15] and Cr[15].

S43, performing a classified median filtering process to the filtering dataset, to obtain a plurality of chromatic aberration channel values having the pseudo-color removed of all of the plurality of candidate points for filtering.

Specifically, in the present embodiment, first, according to a preset chromatic aberration channel threshold, a chromatic aberration channel value in the filtering dataset is allocated into an outlier chromatic aberration region or a target chromatic aberration region; then whether the current target pixel is located in the target chromatic aberration region or not is determined: if a first chromatic aberration channel value of the current target pixel is located in the target chromatic aberration region, then the first chromatic aberration channel value is retained; if a second chromatic aberration channel value of the current target pixel is located in the outlier chromatic aberration region, then the second chromatic aberration channel value of the current target pixel is replaced with a third chromatic aberration channel value closest to the current target pixel in the target chromatic aberration region.

Where the preset chromatic aberration channel threshold shall be reasonably arranged based on a clustering situation of the chromatic aberration channel values of an image and an accuracy requirement for removing the pseudo-colors, so as to ensure that a plurality of details of the image will not be lost while the pseudo-colors are removed, thus resulting in a higher quality of an image being output.

In a real application, it is possible to adopt a self-adaptable adjustment to confirm the chromatic aberration channel threshold of a current cache window. In an embodiment, all chromatic aberration channel values in the filtering dataset are ranked from small to large, a plurality of chromatic aberration channel values that account for 60% of all chromatic aberration channel values in the filtering dataset symmetrically from a median to both sides are taken as a target chromatic aberration region, then two chromatic aberration channel values at both ends are the chromatic aberration channel threshold. Of course, a selection ratio is not limited to 60%, which may be set according to a clustering situation of an actual chromatic aberration channel value and an accuracy requirement for removing the pseudo-colors.

In a specific embodiment, shown as FIG.9, first, the chromatic aberration channel values in the filtering dataset are sorted in a preset manner, such as in an ascending order.

Then, according to the preset chromatic aberration channel threshold, the plurality of chromatic aberration channel values having been sorted in the filtering dataset are divided sequentially into the first outlier chromatic aberration region, the target chromatic aberration region, and the second outlier chromatic aberration region. In this case, it is necessary to set a minimum threshold value and a maximum threshold value of the plurality of chromatic aberration channels, while a chromatic aberration channel value less than the minimum threshold value will be assigned into the first outlier chromatic aberration region, the chromatic aberration channel value greater than the maximum threshold value will be assigned into the second outlier chromatic aberration region, and a plurality of remaining chromatic aberration channel values will be assigned into the target chromatic aberration region. Since the plurality of chromatic aberration channel values in the target chromatic aberration region are clustered, it is possible to obtain a range of the target chromatic aberration region according to a clustering relationship, while a minimum value of the plurality of chromatic aberration channel values in the target chromatic aberration region is the minimum threshold of the chromatic aberration channel, and a maximum value is the maximum threshold of the plurality of chromatic aberration channels.

Now, since an order of each of the plurality of chromatic aberration channel values has been obtained according to sorting a size of each of the plurality of chromatic aberration channel values, thus as long as an order is known of a chromatic aberration channel value closest to the chromatic aberration channel threshold in the filtering dataset having been sorted or the chromatic aberration channel threshold in the filtering dataset having been sorted, a region can be obtained where each chromatic aberration channel value is located.

Followed by determining whether the current target pixel is located in the target chromatic aberration region or not. Specifically, it is possible to obtain the order of the chromatic aberration channel value of the current target pixel in the filtering dataset having been sorted, before determining whether the current target pixel is located in the target chromatic aberration area or not, according to the order. Of course, it is also possible to determine whether the current target pixel is located in the target chromatic aberration region according to a determination result between the chromatic aberration channel value of the current target pixel and the chromatic aberration channel threshold.

Finally, if a first chromatic aberration channel value of the current target pixel is located in the target chromatic aberration region, it indicates that the current target pixel is in one of the clusters, thus the first chromatic aberration channel value thereof will be retained. If a second chromatic aberration channel value of the current target pixel is located in the first outlier chromatic aberration region, it indicates that the current target pixel is an outlier, and the second chromatic aberration channel value is relatively small, then the second chromatic aberration channel value of the current target pixel will be replaced by a third chromatic aberration channel value closest to the first outlier chromatic aberration region in the target chromatic aberration region, i.e., the minimum value of the plurality of chromatic aberration channels in the target chromatic aberration region. If a second chromatic aberration channel value of the current target pixel is located in the second outlier chromatic aberration region, it indicates that the current target pixel is an outlier, and the second chromatic aberration channel value is relatively large, then the second chromatic aberration channel value of the current target pixel is replaced by a third chromatic aberration channel value closest to the second outlier chromatic aberration region in the target chromatic aberration region, i.e., the maximum chromatic aberration channel value in the target chromatic aberration region.

Thus, by determining whether the chromatic aberration channel value of the current target pixel is located in a cluster or not, it is determined whether the current target pixel has a pseudo-color or not, followed by replacing an original chromatic aberration channel value thereof with a chromatic aberration channel value closest to the chromatic aberration channel value of the current target pixel in the cluster, it is possible to ensure that an overall chromatic aberration of the image is reasonable and coordinated, while ensuring that the pseudo-color is removed. Thereby improving an image quality while removing the pseudo-color effectively.

Further, in the present embodiment, it performs the step S5, calculating and obtaining an all-channel-value having the pseudo-color removed, according to a plurality of chromatic aberration channel values having been filtered, before outputting an image having the pseudo-color removed.

Taking the embodiment stated above as an example, a B-G chromatic aberration channel value having been filtered of the current target pixel is denoted as Cbs, a R-G chromatic aberration channel value having been filtered is denoted as Crs, and correspondingly, a chromatic aberration channel value having the pseudo-color removed is denoted respectively as Cb_new and Cr-new, then the current target pixel after the pseudo-color having been removed has a B channel value of Cb_new+G and a R channel value of Cr-new+G.

After traversing all pixels of the image, it is able to obtain an image having the pseudo-color been removed.

The present embodiment provides an interpolation-based image pseudo-color removal method, where for a plurality of edges and texture regions where the pseudo-colors are easy to occur, according to a plurality of different edge directions, it selects a plurality of different candidate points for filtering along a vertical direction of the edge direction, so as to introduce as many candidate points for a plurality of correct colors as possible into the filtering, further enabling the pseudo-colors to be replaced by a largest cluster in a classification filter, thereby being able to filter the outlier pseudo-colors correctly and avoid a fratricide effectively.

The present embodiment provides an interpolation-based image pseudo-color removal method, wherein a method of the classified median filtering process is able to make a chromatic aberration having been filtered close to a main cluster chromatic aberration, rather than close to "reducing color and lowering saturation", thereby it is able to protect a true color of an edge, and avoid a problem of appearing gray or decreasing saturation obviously at the edge.

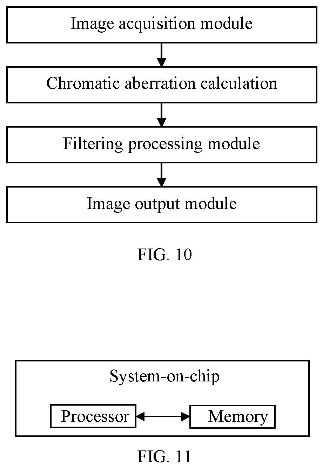

The present embodiment further provides an interpolation-based image pseudo-color removal device, configured to achieve the interpolation-based image pseudo-color removal method stated above, shown as FIG. 10, the device comprises: an image acquisition module configured to acquire an original image; a chromatic aberration calculation module configured to extract a cache window and calculating a plurality of chromatic aberration channel values in the cache window; a filtering processing module configured to filter the plurality of chromatic aberration channel values to remove a pseudo-color according to a direction information of the current target pixel; and an image output module configured to calculate and obtaining an all-channel-value having the pseudo-color removed, according to a plurality of chromatic aberration channel values having been filtered, before outputting an image having the pseudo-color removed.

The interpolation-based image pseudo-color removal device provided by the present embodiment, by calculating the direction information of the current target pixel through the filtering processing module , before positioning the edge region prone to the pseudo-color, and further by filtering the plurality of chromatic aberration channel values output from the chromatic aberration calculation module, it is able to remove accurately the plurality of pseudo-colors from the plurality of edge regions and a plurality of textures while ensuring an image clarity, thereby improving an image quality effectively and removing the plurality of pseudo-colors from the image with high efficiency.

Further, the present embodiment further provides a system-on-chip, the system-on-chip comprises a processor and a memory, where the processor and the memory are coupled, and the processor is configured to execute a computer program stored in the memory, so as to perform the interpolation-based image pseudo-color removal method stated above.

Further, the present application provides a computer storage medium, where the computer storage medium has an executable program stored, and when the executable program is being executed, the interpolation-based image pseudo-color removal method stated above is achieved.

It is noted that each embodiment in the present description is described in a progressive manner, and each embodiment was focusing on a plurality of differences from other embodiments. A same or similar part in each embodiment can be referred to each other. In addition, different parts of each embodiment can also be used in combination with each other, and it is not restricted by the present application.

The present application provides an interpolation-based image pseudo-color removal method and device, a system-on-chip, and a computer readable storage medium, by positioning a plurality of edge regions prone to pseudo-colors based on the direction information of the current target pixel, and filtering the plurality of chromatic aberration channel values obtained through a difference calculation, it is able to remove accurately the plurality of pseudo-colors from the plurality of edge regions and a plurality of textures while ensuring an image clarity, thereby improving an image quality effectively and removing the plurality of pseudo-colors from the image with high efficiency.

The above description of the embodiments disclosed enables those skilled in the art to implement or use the present disclosure. Various modifications to the above embodiments shall be apparent to those skilled in the art, and the general principles defined herein may be implemented in other embodiments without departing from the spirit or scope of the present disclosure. Thus, the present disclosure will not be limited to the embodiments described herein, but be in a widest scope consistent with the principles and novel features disclosed herein.

### INDUSTRIAL APPLICABILITY

The present embodiment provides an interpolation-based image pseudo-color removal method, wherein for a plurality of edges and texture regions where the pseudo-colors are easy to occur, according to a plurality of different edge directions, it selects a plurality of different candidate points for filtering along a vertical direction of the edge direction, so as to introduce as many candidate points for a plurality of correct colors as possible into the filtering, further enabling the pseudo-colors to be replaced by a largest cluster in a classification filter, thereby being able to filter the outlier pseudo-colors correctly and avoid a fratricide effectively.

The present embodiment provides an interpolation-based image pseudo-color removal method, where a method of the classified median filtering process is able to make a chromatic aberration having been filtered close to a main cluster chromatic aberration, rather than close to "reducing color and lowering saturation", thereby it is able to protect a true color of an edge, and avoid a problem of appearing gray or decreasing saturation obviously at the edge.

## Claims

1. An interpolation-based image pseudo-color removal method comprising the steps of:
acquiring an original image;
extracting a cache window based on a current target pixel in the original image;
calculating a plurality of chromatic aberration channel values in the cache window;
performing a filtering process to the plurality of chromatic aberration channel values, to remove a pseudo-color according to a direction information of the current target pixel; and
calculating and obtaining an all-channel-value having the pseudo-color removed, according to a plurality of chromatic aberration channel values having been filtered, before outputting an image having the pseudo-color removed.

2. The method according to claim 1, wherein the step of performing a filtering process to the plurality of chromatic aberration channel values, to remove a pseudo-color according to a direction information of the current target pixel comprising steps:
extracting a plurality of candidate points for filtering from the cache window according to the direction information of the current target pixel to obtain a filtering point set;
acquiring a plurality of chromatic aberration channel values corresponding to all the plurality of candidate points for filtering in the filtering point set to obtain a filtering dataset; and
performing a classified median filtering process to the filtering dataset, to obtain a plurality of chromatic aberration channel values having the pseudo-color removed of all the plurality of candidate points for filtering.

3. The method according to claim 1 or 2, wherein the step of extracting the cache window based on the current target pixel in the original image comprising the steps of:
extracting a cache window of m rows and n columns based on the current target pixel in the original image, wherein m is an odd number no less than 3, and n is an odd number no less than 3; and
locating the current target pixel in a middle column and a middle row of the cache window.

4. The method according to claim 1 or 2, wherein the step of calculating the plurality of chromatic aberration channel values in the cache window, comprising steps:
calculating R-G and B-G as two chromatic aberration channels, if the original image is a RGB image; and
taking U and V as two chromatic aberration channels, if the original image is a YUV image.

5. The method according to claim 2, wherein the direction information of the current target pixel comprising: if the current target pixel is locating on an edge or not, if the current target pixel is a point having a direction or not, and an edge direction of the current target pixel.

6. The method according to claim 5, wherein the step of extracting the plurality of candidate points for filtering from the cache window according to the direction information of the current target pixel to obtain the filtering point set, comprising the steps of:
determining whether the current target pixel is locating at an edge, if so, then determining whether the current target pixel is a point having a direction;
if it is determined that the current target pixel is a point having a direction, then selecting a direction perpendicular to a direction of the edge of the current target pixel as a direction of selecting the plurality of candidate points for filtering, before extracting no less than 8 candidate points for filtering from the cache window along the direction of selecting the plurality of candidate points; and
if it is determined that the current target pixel is a point having no direction, then extracting no less than 8 candidate points for filtering from the cache window according to an isotropic distribution mode.

7. The method according to claim 6, wherein 8 of the plurality of candidate points for filtering having been extracted are adjacent to the current target pixel.

8. The method according to claim 2, wherein the step of performing the classified median filtering process to the filtering dataset, to obtain the plurality of chromatic aberration channel values having the pseudo-color removed of all the plurality of candidate points for filtering, comprising the steps of:
allocating a chromatic aberration channel value in the filtering dataset into an outlier chromatic aberration region or a target chromatic aberration region, according to a preset chromatic aberration channel threshold;
determining whether the current target pixel is located in the target chromatic aberration region;
retaining a first chromatic aberration channel value, if the first chromatic aberration channel value of the current target pixel is located in the target chromatic aberration region; and
replacing a second chromatic aberration channel value of the current target pixel with a third chromatic aberration channel value closest to the current target pixel in the target chromatic aberration region, if the second chromatic aberration channel value of the current target pixel is located in the outlier chromatic aberration region.

9. The method according to claim 8, wherein the step of determining whether the current target pixel is located in the target chromatic aberration region comprising the steps of:
sorting the plurality of chromatic aberration channel values in the filtering dataset according to a preset method;
obtaining a rank of each of the plurality of chromatic aberration channel values of the current target pixel in the filtering dataset having been sorted; and
determining whether the current target pixel is located in the target chromatic aberration region based on the rank thereof.

10. An interpolation-based image pseudo-color removal device, configured to achieving the interpolation-based image pseudo-color removal method according to any one of the claims 1 to 9, wherein the device comprising:
an image acquisition module configured to acquire an original image;
a chromatic aberration calculation module configured to extract a cache window and calculating a plurality of chromatic aberration channel values in the cache window;
a filtering processing module configured to filter the plurality of chromatic aberration channel values to remove a pseudo-color according to a direction information of the current target pixel; and
an image output module configured to calculate and obtaining an all-channel-value having the pseudo-color removed, according to a plurality of chromatic aberration channel values having been filtered, before outputting an image having the pseudo-color removed.

11. A system-on-chip,comprising a processor coupled with a memory, wherein the processor is configured to execute a computer program stored in the memory, so as to perform the interpolation-based image pseudo-color removal method according to any one of the claims 1 to 9.

12. A computer storage medium, having an executable program stored therein, wherein when the executable program is being executed, the interpolation-based image pseudo-color removal method according to any one of the claims 1 to 9 is achieved.
